# EUROPEAN PATENT SPECIFICATION

(11) **EP 1 180 851 B1**
(45) Date of publication and mention of the grant of the patent: **22.10.2003**
(21) Application number: 01306712.9
(22) Date of filing: 06.08.2001
(51) Int. Cl.: H04B 1/10, H04B 1/12, H04L 27/26

(54) **COFDM tuner with impulse noise reduction**
COFDM tüner für Rauschimpulsverringerung
Syntoniseur COFDM pour la réduction du bruit impulsionnel

(30) Priority: 16.08.2000 GB 0020071
(43) Date of publication of application: 20.02.2002
(73) Proprietor: Zarlink Semiconductor Limited, Swindon, Wiltshire SN2 2QW (GB)
(72) Inventor: Cowley, Nicholas Paul, Wroughton, Wiltshire SN4 ORT (GB); Payne, Alison, London SW9 9JY (GB); Dawkins, Mark, London SW11 5JB (GB)
(74) Representative: Robinson, John Stuart

(56) References cited:
- EP-A- 0 930 719
- US-A- 4 736 163

## Description

The present invention relates to a tuner. Such a tuner may, for example, be used for receiving television signals and may form part of a set-top box, a television receiver or a video cassette recorder.

The DVB-T (Digital Video Broadcasting - Terrestrial) standard for DTT (Digital Terrestrial Television) employs Coded Orthogonal Frequency Division Multiplexing (COFDM) as the modulation scheme for transmission of the digital bit-stream. Implementation of the modulators and demodulators in this system is accomplished using the Inverse Fast Fourier Transform (IFFT) algorithm to generate the time domain signal from the complex frequency domain representation at the transmitter and the Fast Fourier Transform (FFT) to recover the complex constellation of data points at the receiver. These operations apply to separate COFDM "symbols" of a length in time equal to the reciprocal of the individual carrier spacing. Thus, each symbol corresponds to a constellation of points in the complex plane, i.e. each carrier has fixed amplitude and phase for the duration of a symbol.

Impulse noise may occur via switching transients of nearby appliances, such as fridges and power tools. An important marketing point of DTT is the ease of installation, allowing the consumer to set the system up alone. This unfortunately makes it likely that, in many case, a far from ideal installation will be achieved, increasing the likelihood of poor interference protection.

If impulse noise occurs superimposed on the received radio frequency (RF) signal at the antenna, this will appear at the input to the FFT as the impulse response of the intervening tuner/receiver components. The impulse energy in band will typically have a wide band sine-type envelope and will flood the received data spectrum, causing many errors in one transmitted COFDM symbol. Once the spectrum after the FFT is corrupted, correction is not possible and it is the nature of the COFDM modulation scheme that makes it vulnerable to impulse noise. However, digitisation of the COFDM signal at intermediate frequency (IF) by an analogue/digital converter (ADC) tends to suppress impulse noise in conventional tuner designs. These will suppress unwanted channels in the analogue domain prior to the ADC. Hence the whole dynamic range of the ADC will be filled with the unwanted channel signal. High level impulsive noise will be clipped at the ADC, assuming that the receiver AGC loop does not "capture" the impulse level and adjust the gain. This is very unlikely as the impulse will by definition be a short pulse, of the order of nanoseconds in length.

There is a desire to increase processing in the Digital domain, thus shifting the tight specifications to the ADC. In such systems, it is probable that any adjacent channel unwanted energy will be digitised by the ADC along with the desired channel. In this case, if the adjacent channel is at a higher level (for example in the UK where it may be +35dB relative to the wanted DVB-T channel), only part of the ADC dynamic range will be occupied by the wanted signal, allowing a much higher level impulse through to the FFT. This will in turn translate to much higher level interference across the wanted spectrum of COFDM carriers, causing extremely high error rates for the symbol in which the impulse occurred.

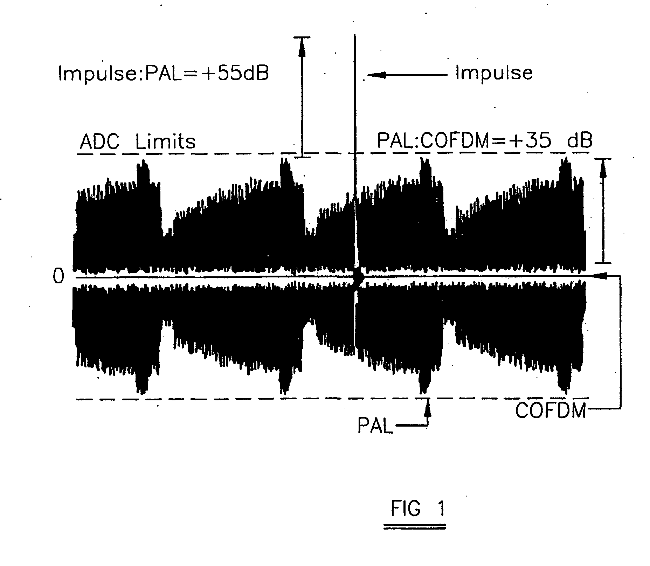

Figure 1 of the accompanying drawings shows typical conditions for such a direct tuner system receiving a wanted signal at 35dB below an adjacent channel (a PAL Analogue TV channel). This drawing illustrates the three components of the signal at the ADC input, namely the adjacent channel PAL signal, the desired COFDM signal (illustrated in "white" superimposed on the PAL signal) and the noise impulse. If an impulse occurs at an amplitude +50dB relative to the PAL peak amplitude and is then clipped to that same amplitude, the received complex constellation after FFT will show a bit error rate (BER) prior to any Viterbi decoding of the order of 40% (for Quasi Error free transmission, this value should be less than 1%). Such an increase in BER will not cause problems with receiver lock, as long as the impulse occurs infrequently. However, it is possible that visible distortion will occur on the picture, depending on the programme being viewed and the MPEG-2 decoder chip. If impulsive noise corrupts consecutive symbols, the problem will become more severe.

EP 0 597 525 discloses a noise suppression arrangement for frequency modulation (FM) receivers. A noise detection arrangement passes signals above a threshold, which signals are assumed to be noise, to a holding circuit which holds the immediately preceding signal level to perform a crude interpolation to replace the noise.

Similarly, US 5 261 004 discloses a noise blanking arrangement in which the signal level is held when noise is detected. In order to detect noise, various signals are compared with filtered examples of the signal.

EP 0 651 521 discloses a noise detection arrangement for use in radio telephony. Noise is detected by means of filtering with two different time constants.

EP 0 930 719 discloses a car radio for receiving FM signals and including an arrangement for detecting and blanking noise impulses. This arrangement generates a threshold by filtering out the desired signal in a high-pass filter following FM demodulation and averaging the remaining noise. The unfiltered signal is compared with the threshold and blanked when its amplitude exceeds the threshold.

US 4 736 163 discloses another arrangement for detecting and blanking noise impulses. A running average of the output of a signal peak detector is formed and a threshold is derived from this. The output of the peak detector is compared with this to detect noise impulses.

According to a first aspect of the invention, there is provided a tuner comprising an input section for converting a radio frequency signal to a sampled intermediate signal, comprising a desired signal and noise, a threshold generator for generating a threshold, a comparator for comparing the amplitude of each sample of the intermediate signal with the threshold, and a corrector responsive to the comparator for setting to zero each of the samples whose amplitude is greater than the threshold, characterised in that the threshold generator is arranged to generate the threshold as a first function of an average of the amplitudes of a plurality of the samples of the intermediate signal and is arranged to exclude from the average any sample whose amplitude exceeds the threshold.

The corrector may be arranged to set to zero inconsecutive samples after each sample whose amplitude is greater than the threshold, where n is a positive integer. n may be a function of the impulse response of the input section.

The corrector may be arranged to set to zero m consecutive samples before each sample whose amplitude is greater than the threshold, where m is a positive integer. m may be a function of the impulse response of the input section.

The average may be a moving average.

The threshold may be greater than the product of the average and the peak-to-average ratio of the intermediate signal.

The threshold may be greater than three times the average. The threshold may be substantially equal to 5.3 times the average.

The samples may have a sample rate of 9.143MHz. n may be greater than 1 and less than 5. The moving average may be over a window of substantially 1000 consecutive samples.

The input section may comprise a zero intermediate frequency converter.

The input section may supply the samples at in-phase and quadrature outputs.

The input section may comprise an analogue/digital converter for forming the samples as digital samples.

The tuner may be provided for receiving COFDM signals.

The tuner may comprise a fast Fourier transformer for processing samples from the corrector.

The tuner may be provided for receiving television signals.

According to further aspects of the invention, there are provided a set-top box, a television receiver and a television signal recorder, each comprising a tuner according to the first aspect of the invention.

It is thus possible to provide a tuner whose performance is substantially improved under impulsive noise conditions. In the case of digital television signals, bit error rate performance can be substantially improved so that picture interference is reduced. These techniques are particularly useful for modulation schemes which make use of a fast Fourier transform algorithm in the tuner, for example to extract the complex value of each carrier in a COFDM scheme.

The invention will be further described, by way of example, with reference to the accompanying drawings, in which:
Figure 1 is a waveform diagram illustrating an impulse-corrupted digital television signal and a high level adjacent channel PAL analogue signal;
Figure 2 is a block circuit and functional diagram illustrating a tuner constituting an embodiment of the invention; and
Figure 3 illustrates diagrammatically the effect of impulsive noise interference and the improvement in performance which may be achieved by the tuner of Figure 2.

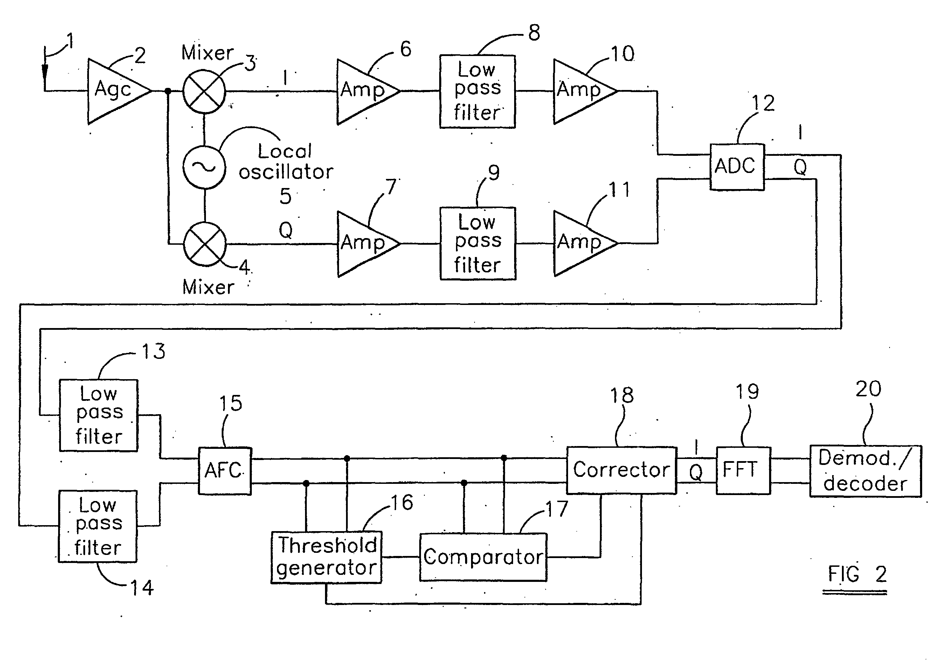

The COFDM television tuner shown in Figure 2 is connected to an aerial input 1 and comprises an input automatic gain control (AGC) amplifier 2 whose output is connected to mixers 3 and 4. The mixers 3 and 4 form part of a zero intermediate frequency (ZIF) frequency converter for converting the input signals directly to baseband signals.

A local oscillator 5 supplies local oscillator signals to the mixers 3 and 4 which are in phase quadrature with respect to each other so that the mixer 3 produces an in-phase signal I and the mixer 4 produces a quadrature phase signal Q. The outputs of the mixers 3 and 4 are supplied via buffer amplifiers 6 and 7, respectively, to low pass 'filters 8 and 9, respectively, which attenuate or eliminate energy outside the zero intermediate frequency bandwidth. The outputs of the filters 8 and 9 are supplied via further buffer amplifiers 10 and 11, respectively, to an analogue/digital converter (ADC) 12.

The parts 2 to 11 of the tuner represent an analogue section whose quadrature output signals are converted by the ADC 12 to the digital domain. The remaining parts of the tuner operate in the digital domain and are illustrated as functional blocks in Figure 2 although they would normally be embodied by dedicated digital hardware or possibly by a programmable data processor under software control.

The outputs of the ADC 12 are supplied via digital low pass filters 13 and 14 to an automatic frequency control (AFC) circuit 15, which centres the signals exactly around 0Hz.

The digitised samples of the I and Q signals formed by the ADC 12, filtered by the filters 13 and 14 and centred on 0Hz by the circuit 15 are supplied to the inputs of a threshold generator 16, a comparator 17 and a corrector 18. In a typical example of the tuner shown in Figure 2, the ADC 12 samples the incoming signals at a sample rate of 9.143MHz. The threshold generator 16 forms a moving average of a number of consecutive samples of each of the I and Q signals. In the specific example mentioned above, the moving window covers about 1000 consecutive samples.

In order to generate a threshold which is capable of discriminating impulsive noise signals, the threshold generator 16 makes use of the known peak-to-mean ratio of COFDM signals, which is about 9.5 decibels (dB) (a ratio of about 3:1). In order to avoid false triggering, the threshold generator 16 sets the threshold higher than this, for example by 3dB or even by as much as 5dB, so that the threshold supplied to the comparator 17 by the generator 16 is, for example, substantially equal to 5.3 times the moving window average of the amplitudes of the samples.

The comparator 17 compares each of the I and Q samples with the threshold and signals the corrector 18 whenever the amplitude of a sample exceeds the current value of the threshold. In response to such signalling, the corrector 18 sets the value of the sample to 0. The corrector 18 also sets to 0 the values of one or more samples whose values are below the current value of the threshold and which are immediately before and/or after the sample or samples having values exceeding the threshold. In particular, the noise impulse is spread by the impulse response of the section of the tuner upstream of the corrector 18 and the number of consecutive samples which are set to zero or blanked is determined in accordance with the impulse response so as to remove as much impulsive noise energy as possible from the signal supplied to each of the outputs of the corrector 18. For the specific example mentioned above, it has been found that the number of consecutive samples which could be set to 0 or blanked is typically 0 or 1 sample before and from 3 to 5 samples after the sample or consecutive samples whose values exceed the threshold. However, the impulse response of the upstream section can be calculated, measured or simulated for any particular arrangement and this may be used to establish the number of consecutive samples which will be unavoidably corrupted by impulsive noise and which should therefore be blanked.

If the tuner input section has an excessively long impulse response, for example corresponding to 10 or more samples, it is possible that the effects of such impulsive noise cannot be corrected satisfactorily because blanking 10 or more consecutive samples may introduce an unacceptably large number of errors. In such a case, the impulse response of the tuner, particularly the analogue low pass filters 8 and 9 and the digital low pass filters 13 and 14 should be improved in order to achieve satisfactory performance.

The corrector 18 supplies a signal to the threshold generator 16 indicating which samples have been blanked. The threshold generator 16 then prevents such samples from being used in the process of generating the average on which the threshold is based.

The I and Q outputs of the corrector 18 are supplied to the inputs of a fast Fourier transform 19 which converts the time-domain digitised sampled signal to the complex frequency domain. The output of the transform 19 is then passed to a block 20 for further processing, such as demodulation and decoding in order to supply image signals suitable for display by a television receiver or for recording by a video cassette recorder.

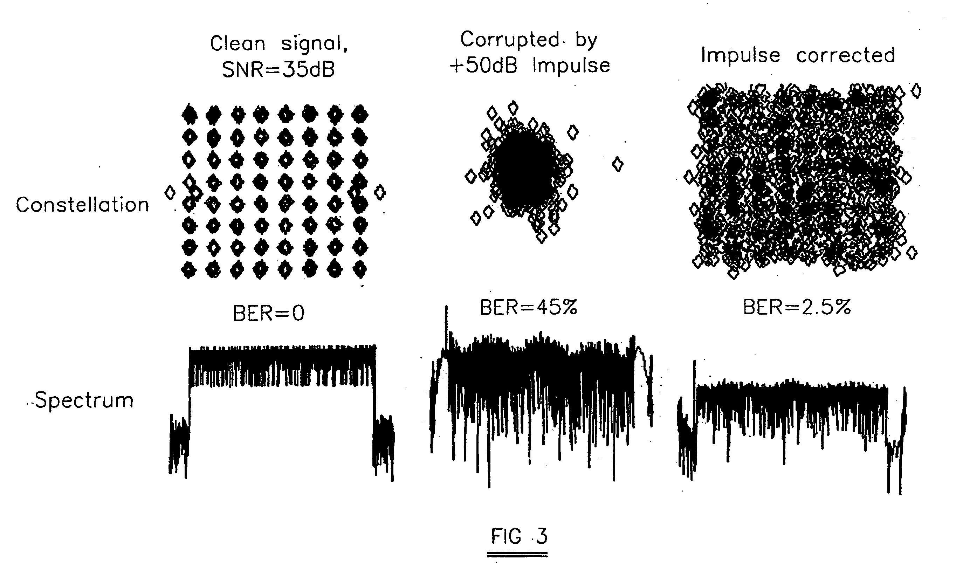

Figure 3 illustrates the time-domain input signals to the transform 19 and the resulting frequency-domain constellation at the output of the transform 19 for a "clean" signal' without interference, for an uncorrected signal suffering impulsive interference, and for a corrected signal in accordance with the noise correction or reduction described hereinbefore and illustrated in Figure 2. The corresponding bit error rates are also indicated. The clean signal is assumed to have a signal-to-signal noise ratio (SNR) of 35 dB. Such a signal produces a 0 BER.

The corrupted signal is corrupted by an impulse with an amplitude of 50dB and a duration of 5 nanoseconds. The resulting constellation at the output of the transform 19 is very seriously corrupted and results in a BER of 45%.

The impulse correction technique described hereinbefore provides, a constellation at the output of the transform 19 which much more closely resembles the actual constellation of the clean signal. In his case, the BER is 2.5% which, although not corresponding to quasi error free reception, represents a substantial improvement and permits acceptable television pictures to be displayed with relatively unobtrusive interference artefacts.

The use of this technique is very advantageous if more than one COFDM symbol is affected. Without correction, it is likely that the picture displayed on the television screen would quickly become unviewable or completely lost. With correction, although quasi error free reception might not be possible, there should not be an interruption in viewing. Instead; there may be some noticeable but tolerable picture interference.

Although this technique has been described in detail with respect to a COFDM modulation scheme for digital television signals in the context of a zero intermediate frequency conversion technique, it may be applied to other types of systems where impulsive noise interference is problematic. The technique is particularly useful for tuners where a large amount of the signal processing is performed in the digital domain and where there is relatively less frequency domain filtering before the analogue/digital conversion. In particular, this technique allows such tuners to be provided with an adequate performance and thus reduces the requirements for filtering in the analogue domain. This in turn eases the design of "on-chip" analogue filters. The technique is particularly useful for any demodulation scheme employing the FFT and possible other applications include digital audio broadcasting (DAB) and any system using a form of OFDM modulation.

## Claims

1. A tuner comprising an input section (2-15) for converting a radio frequency signal to a sampled intermediate signal, a threshold generator (16) for generating a threshold as a first function of an average of the amplitudes of a plurality of the samples of the intermediate signal, a comparator (17) for comparing the amplitude of each sample of the intermediate signal with the threshold, and a corrector (18) responsive to the comparator (17) for setting to zero each of the samples whose amplitude is greater than the threshold, **characterised in that** the threshold generator (16) is arranged to exclude from the average any sample whose amplitude exceeds the threshold and **in that** the intermediate signal comprises a desired signal and noise.

2. A tuner as claimed in claim 1, **characterised in that** the corrector (18) is arranged to set to zero n consecutive samples after each sample whose amplitude is greater than the threshold, where n is a positive integer.

3. A tuner as claimed in claim 1 or 2, **characterised in that** the corrector (18) is arranged to set to zero m consecutive samples before each sample whose amplitude is greater than the threshold, where m is a positive integer.

4. A tuner as claimed in any one of the preceding claims, **characterised in that** the average is a moving average.

5. A tuner as claimed in any one of the preceding claims, **characterised in that** the threshold is greater than the product of the average and the peak-to-average ratio of the intermediate signal.

6. A tuner as claimed in any one of the preceding claims, **characterised in that** the threshold is greater than three times the average.

7. A tuner as claimed in any one of the preceding claims, **characterised in that** the input section (2-15) comprises a zero intermediate frequency converter (3-5).

8. A tuner as claimed in any one of the preceding claims, **characterised in that** the input section (2-15) supplies the samples at in-phase and quadrature outputs.

9. A tuner as claimed in any one of the preceding claims, **characterised in that** the input section (2-15) comprises an analogue/digital converter (12) for forming the samples as digital samples.

10. A tuner as claimed in any one of the preceding claims, **characterised by** a COFDM demodulator (20).

11. A tuner as claimed in any one of the preceding claims, **characterised by** a fast Fourier transformer (19) for processing samples from the corrector (18).

12. A set top box **characterised by** a tuner (2-20) as claimed in any one of the preceding claims.

13. A television receiver **characterised by** a tuner (2-20) as claimed in any one of claims 1 to 11.

14. A television signal recorder **characterised by** a tuner (2-20) as claimed in any one of claims 1 to 11.

## Patentansprüche

1. Tuner, umfassend: einen Eingangsabschnitt (2-15) zum Umwandeln eines Funkfrequenzsignals in ein abgetastetes Zwischensignal, einen Schwellengenerator (16) zum Erzeugen einer Schwelle als eine erste Funktion eines Durchschnitts der Amplituden einer Vielzahl der Abtastwerte in dem Zwischensignal, einen Vergleicher (17) zum Vergleichen der Amplitude jedes Abtastwerts des Zwischensignals mit der Schwelle, und einen Korrigierer (18), der auf den Vergleicher (17) anspricht, um jeden der Abtastwerte, dessen Amplitude größer als die Schwelle ist, auf Null zu setzen, **dadurch gekennzeichnet, dass** der Schwellengenerator (16) angeordnet ist, um aus dem Durchschnitt jeden Abtastwert auszuschließen, dessen Amplitude die Schwelle übersteigt und, dass das Zwischensignal ein gewünschtes Signal und Rauschen umfasst.

2. Tuner nach Anspruch 1, **dadurch gekennzeichnet, dass** der Korrigierer (18) angeordnet ist, um n aufeinanderfolgende Abtastwerte nach jedem Abtastwert, dessen Amplitude größer als der Schwellwert ist, auf Null zu setzen, wobei n eine positive ganze Zahl ist.

3. Tuner nach Anspruch 1 oder 2, **dadurch gekennzeichnet, dass** der Korrigierer (18) angeordnet ist, um m aufeinanderfolgende Abtastwerte vor jedem Abtastwert, dessen Amplitude größer als die Schwelle ist, auf Null zu setzen, wobei m eine positive ganze Zahl ist.

4. Tuner nach irgendeinem der vorangehenden Ansprüche, **dadurch gekennzeichnet, dass** der Durchschnitt ein sich bewegender Durchschnitt ist.

5. Tuner nach irgendeinem der vorangehenden Ansprüche, **dadurch gekennzeichnet, dass** die Schwelle größer als das Produkt der Schwelle und des Spitze-zu-Durchschnitts-Verhältnisses des Zwischensignals ist.

6. Tuner nach irgendeinem der vorangehenden Ansprüche, **dadurch gekennzeichnet, dass** die Schwelle größer als drei mal der Durchschnitt ist.

7. Tuner nach irgendeinem der vorangehenden Ansprüche, **dadurch gekennzeichnet, dass** der Eingabeabschnitt (2-15) einen Null-Zwischenfrequenzwandler (3-5) umfasst.

8. Tuner nach irgendeinem der vorangehenden Ansprüche, **dadurch gekennzeichnet, dass** der Eingangsabschnitt (2-15) die Abtastwerte an Gleichphasen- und Quadratur-Ausgänge liefert.

9. Tuner nach irgendeinem der vorangehenden Ansprüche, **dadurch gekennzeichnet, dass** der Eingangsabschnitt (2-15) einen Analog/Digital-Wandler (12) zum Bilden der Abtastwerte als digitale Abtastwerte umfasst.

10. Tuner nach irgendeinem der vorangehenden Ansprüche, **gekennzeichnet durch** einen COFDM-Demodulator (20).

11. Tuner nach irgendeinem der vorangehenden Ansprüche, **gekennzeichnet durch** einen Schnelle-Fourier-Transformierer (19) zum Verarbeiten von Abtastwerten von dem Korrigierer (18).

12. Set-Top-Box, **gekennzeichnet durch** einen Tuner (2-20) nach irgendeinem der vorangehenden Ansprüche.

13. Fernsehempfänger, **gekennzeichnet durch** einen Tuner (2-20), wie in irgendeinem der Ansprüche 1 bis 11 beansprucht.

14. Fernsehsignalrecorder, **gekennzeichnet durch** einen Tuner (2-20), wie in irgendeinem der Ansprüche 1 bis 11 beansprucht.

## Revendications

1. Tuner comprenant une section d'entrée (2-15) pour convertir un signal radiofréquence selon un signal intermédiaire échantillonné, un générateur de seuil (16) pour générer un seuil en tant que première fonction d'une moyenne des amplitudes d'une pluralité des échantillons du signal intermédiaire, un comparateur (17) pour comparer l'amplitude de chaque échantillon du signal intermédiaire au seuil et un correcteur (18) sensible au comparateur (17) pour établir à zéro chacun des échantillons dont l'amplitude est supérieure au seuil, **caractérisé en ce que** le générateur de seuil (16) est agencé de manière à exclure de la moyenne un quelconque échantillon dont l'amplitude excède le seuil et **en ce que** le signal intermédiaire comprend un signal et un bruit comme souhaité.

2. Tuner selon la revendication 1, **caractérisé en ce que** le correcteur (18) est agencé pour établir à zéro n échantillons consécutifs après chaque échantillon dont l'amplitude est supérieure au seuil, où n est un entier positif.

3. Tuner selon la revendication 1 ou 2, **caractérisé en ce que** le correcteur (18) est agencé pour établir à zéro m échantillons consécutifs avant chaque échantillon dont l'amplitude est supérieure au seuil, où m est un entier positif.

4. Tuner selon l'une quelconque des revendications précédentes, **caractérisé en ce que** la moyenne est une moyenne mobile.

5. Tuner selon l'une quelconque des revendications précédentes, **caractérisé en ce que** le seuil est supérieur au produit de la moyenne et du rapport crête sur moyenne du signal intermédiaire.

6. Tuner selon l'une quelconque des revendications précédentes, **caractérisé en ce que** le seuil est supérieur à trois fois la moyenne.

7. Tuner selon l'une quelconque des revendications précédentes, **caractérisé en ce que** la section d'entrée (2-15) comprend un convertisseur de fréquence intermédiaire de zéro (3-5).

8. Tuner selon l'une quelconque des revendications précédentes, **caractérisé en ce que** la section d'entrée (2-15) applique les échantillons au niveau de sorties en phase et en quadrature.

9. Tuner selon l'une quelconque des revendications précédentes, **caractérisé en ce que** la section d'entrée (2-15) comprend un convertisseur analogique-numérique (12) pour former les échantillons en tant qu'échantillons numériques.

10. Tuner selon l'une quelconque des revendications précédentes, **caractérisé par** un démodulateur COFDM (20).

11. Tuner selon l'une quelconque des revendications précédentes, **caractérisé par** un dispositif de transformation de Fourier rapide (19) pour traiter des échantillons en provenance du correcteur (18).

12. Décodeur **caractérisé par** un tuner (2-20) selon l'une quelconque des revendications précédentes.

13. Récepteur de télévision **caractérisé par** un tuner (2-20) selon l'une quelconque des revendications 1 à 11.

14. Enregistreur de signal de télévision **caractérisé par** un tuner (2-20) selon l'une quelconque des revendications 1 à 11.
